**Europäisches Patentamt**

**European Patent Office**

**Office européen des brevets**

(11) Publication number: **0 268 323**
**B1**

(12) **EUROPEAN PATENT SPECIFICATION**

(45) Date of publication of patent specification: **23.01.91**

(51) Int. Cl.⁵: **B 60 P 1/52**

(21) Application number: **87202152.2**

(22) Date of filing: **05.11.87**

(54) Loading floor and a vehicle comprising such a loading floor.

(30) Priority: **10.11.86 NL 8602846**

(43) Date of publication of application:
**25.05.88 Bulletin 88/21**

(45) Publication of the grant of the patent:
**23.01.91 Bulletin 91/04**

(84) Designated Contracting States:
**BE DE FR GB NL**

(56) References cited:
**FR-A-2 401 082**
**US-A-2 534 057**
**US-A-3 904 022**

(73) Proprietor: **Carrosseriefabriek Heering B.V.**
**Spinfondsweg 4**
**NL-8171 NV Vaassen (NL)**

(72) Inventor: **Gerritsen, Hermannus Gerrit**
**Trekweg 19**
**NL-7322 HN Apeldoorn (NL)**
Inventor: **Heering, Gerrit**
**Eekterweg 16**
**NL-8171 NV Vaassen (NL)**
Inventor: **Jonker, Jan**
**Spinfondsweg 4l**
**NL-8171 NV Vaassen (NL)**
Inventor: **Elkink, Hendrik Johan**
**Gerrit Slagmanstraat 4**
**NL-7271 SE Harfsen (NL)**

(74) Representative: **Prins, Hendrik Willem et al**
**Octrooibureau Arnold & Siedsma**
**Sweelinckplein, 1**
**NL-2517 GK The Hague (NL)**

Courier Press, Leamington Spa, England.

## Description

The present invention relates to a loading floor having two roller conveyors located at an interval from each other and transporting means for transporting freight over the roller conveyors.

A known loading floor is loaded by placing the freight, for instance products placed on pallets, in a row on the roller conveyor If the loading floor forms part of a vehicle, both the roller conveyors are disposed parallel and adjacent to each other and extend substantially over the whole length and breadth. When such a vehicle is loaded, the freight has to be arranged in the row such that products for delivery can always be removed at the successive delivery addresses from the end of the row of products. A conflict occurs however when packaging or other products have to be taken away from the various delivery addresses.

US—A—3 904 022 and FR—A—2 401 082 both disclose a loading floor having two conveyors located at an interval from each other which are intersected by a transverse conveyor lying transversely to both conveyors. Moving means are provided by which the common transporting plane of the two conveyors and the transverse transporting plane of the transverse conveyor may be moved relatively allowing lengthwise or transversewise conveying of freight. In US—A—3 904 022 the transverse conveyor has a stationary transverse transporting plane, whereas in FR—A—2 401 082 the transporting plane of the longitudinal conveyors is stationary. If freight is to be transported by the transverse conveyor and contacts an adjacent freight piece on the longitudinal conveyors at the beginning or at the end of the transverse transportation, the transverse transportation is adversely affected. The freight to be transversely transported may be withheld by the adjacent freight piece, or rotated on the transverse conveyor, resulting in an improper transportation over the conveyors. This drawback may be overcome if the transverse conveyor is moved from a rest position into a transverse transporting plane located at a higher level relative to the transporting plane of the two conveyors, and during this movement towards the transverse transporting plane, the transverse roller conveyor is displaced over a distance a in the same direction of the transporting direction of the roller conveyors supplying freight, towards its adjacent roller conveyor end. The piece of freight is removed from the row and placed at a distance away from the row before transverse transporting can take place, so that during the transverse transporting disturbances or obstructions occur as little as possible, This is obtained with a loading floor according to the invention, having two roller conveyors located at an interval from each other and transporting means for conveying freight over said roller conveyors, having at least one transverse roller conveyor provided with load transporting means lying transversely of both said roller conveyors and having moving means with which on the one hand both said roller conveyors and on the other said transverse roller conveyor being movable relative to each other, wherein the transverse roller conveyor is mounted on a frame which frame being movable such that a transporting plane of the transverse roller conveyor is displaceable in and out of a common transporting plane of the two roller conveyors and when the transverse roller conveyor is in its transporting position, the transverse transporting plane is located at a higher level relative to the common transporting plane and the transverse roller conveyor is displaced over a distance a in the transportation direction of the roller conveyor towards its adjacent roller conveyor end.

According to a preferred embodiment, the transverse roller conveyor is located at the end positions of both the roller conveyors. It is however possible that the transverse roller conveyor connects the two roller conveyors at other places, so that an integrating loading floor location can be realized.

An optimum loading and maximum freedom of loading is achieved when both roller conveyors form a transporting loop with two transverse roller conveyors. The load can in this way be transported over the loading floor in a path with the form of a closed loop and the freight can be added to the row or removed from it as required from the loading and unloading position.

A rapid loading of the loading floor is achieved if control means regulate the load transport over both roller conveyors and over the transverse roller conveyor or conveyors.

If the loading floor is arranged in a vehicle, not only does the load have to be guided during transportation over the roller conveyor but shifting of the load has also to be prevented during movement of the vehicle, and recommended for this purpose is that the roller conveyors which extend parallel and adjacent to each other are separated by a partition wall. Certainly in the case that the load is reasonably high it is recommended that the frame of the transverse roller conveyor is provided with a stop wall so that vehicle walls and other boundings of the loading floor cannot come into contact with the load that is present.

The mentioned and other features will be elucidated with reference to two embodiments of a loading floor according to the invention, which in the case of both these embodiments, is accommodated in a vehicle. It will however be apparent that the loading floor according to the invention can be employed in further places and is certainly not restricted to a vehicle floor.

In the drawing:

Fig. 1 and 3 show perspective, partly broken away views of a vehicle that is provided with a loading floor in accordance with the invention; and

Fig. 2 shows on a larger scale a partly broken away, perspective view of detail II from fig. 1.

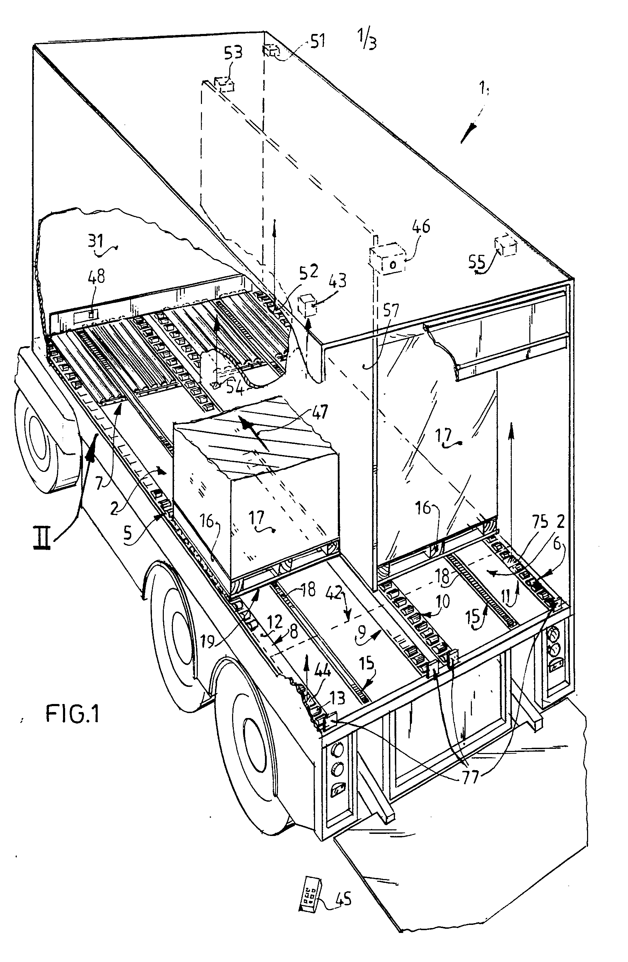

Fig. 1 shows a vehicle 1 provided with a loading floor 2 according to the invention. Loading floor 2 is provided with two roller conveyors 5 and 6 extending parallel to each other over the whole length of the loading floor 2 and a transverse roller conveyor 7 extending transversely thereof. The length of the transverse roller conveyor is substantially equal to the width of vehicle 1 and the width of the roller conveyors 5 and 6 together.

Roller conveyors 5 and 6 are each built up of two rows 8, 9, 10, 11 of rollers 13 sunk into and mounted for rotation in a profile 12. Each profile 12 rests on an air hose (not shown) and is arranged and guided in loading floor 14 such that when the air hose (not shown) is inflated with air the rollers 13 protrude above loading floor 14 and when the pressure is removed from the air hose they lie sunk into the loading floor 14. The transporting means 15 for transporting products 17 placed on a pallet 16 over the roller conveyors 5 and 6 comprise an endless rotating chain 18, the upper part of which runs over and through a plate supported by an air hose so that when air is fed into the air hose the chain 18 protrudes above the loading floor 14 and grips onto the bottom surface 19 of pallet 16 and displaces the pallet 16 with product 17 over rolls 13 when chain 18 is driven.

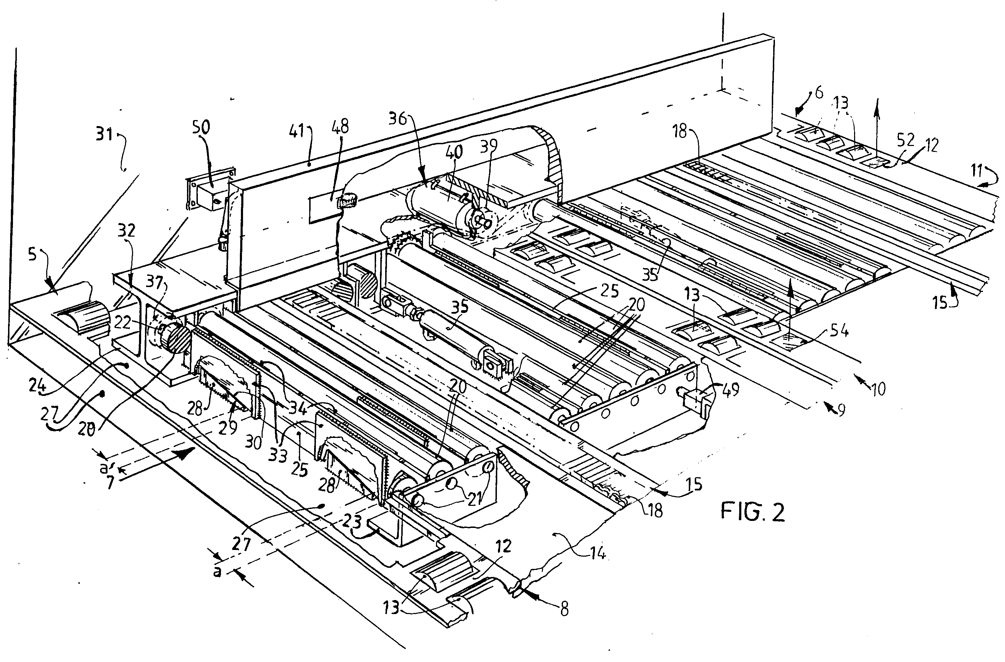

As fig. 2 shows in more detail, the transverse roller conveyor 7 consists of a number of elongate rolls 20 which are mounted for rotation with shaft end parts 21 and 22 in respectively a corner profile 23 and an H—profile 24. Extending between rolls 20 are cross members 25 which are rigidly connected to profiles 23 and 24. Each cross member 25 is provided on its underside with an indentation 26 which is substantially complementary to a wedge 28 attached to a sunken loading floor portion 27. An upward inclining side 29 of the indentation 26 rests on the side face 30 of cross member 25. The side 29 and the side face 30 slope upward in the direction of a wall 31 of vehicle 1. The frame 32 of transverse roller conveyor 7 is formed by the profiles 23 and 24 and the cross members 25 connecting these profiles. Frame 32 rests on the wedges 28 which are enclosed at the sides by cross plates 33 and 34 attached to cross member 25 on either side of wedge 28. The frame 32 is further connected via hydraulic cylinders 35 to the floor portion 27. Hydraulic cylinders 35 and wedges 28 form the moving means for the rolls 20 mounted in frame 32. The transporting means 36 for the transverse roller conveyor 7 comprise a toothed wheel 37 attached to each shaft end part 22, which wheel grips onto a chain 38 driven with a toothed wheel 39 of the motor 40.

A stop wall 41 is further attached to the H—profile 24.

Fig. 2 shows the rest position for the transverse roller conveyor 7, whereby an imaginary transporting surface resting on rolls 20 is situated at a lower level than an imaginary transporting surface resting on the rolls 13 protruding above loading floor 14. When cylinders 35 are actuated the transporting surfaces of the transverse roller conveyor 7 and the roller conveyors 5 and 6 come first to lie in one plane, and the transporting surface of transverse roller conveyor 7 subsequently comes out on a level lying above this plane. In this way a pallet 16 can be removed from the roller conveyor 5 and be displaced at a higher located level in transverse direction to the other roller conveyor 6, without any contact occurring with either of roller conveyors 5 and 6. This contact is first restored after transverse roller conveyor 7 has returned to the position shown in fig. 2.

It will be apparent that what is involved here is a relative movement between on the one hand the transverse roller conveyor 7 and on the other both roller conveyors 5 and 6, so that instead of the situation shown the transverse roller conveyor 7 can in the other situation be stationary and both roller conveyors 5 and 6 mobile. All that is essential is that during transporting the relevant transporting surface is located at a higher level than the other transporting surface.

In the description following hereinafter of the operation of loading floor 2 according to the invention, the control means are also described.

Using a lifting truck (not shown) a product placed on a pallet is positioned on the roller conveyor 5 at the loading location 42 indicated with dashed lines. The presence of the product at the loading location 42 is detected by the detector 43, because the light path is interrupted between detector 43 and the co-operating reflector 44 which occupies the position of a roll 13. The control means are actuated by supplying a signal from a manually operated transmitter 45 to the receiver 46. After the air hoses for both roller conveyors 5 and 6 and the chains 18 have been pumped up, chains 18 are driven until the loading location 42 is free. On repetition of the above described loading process (whereby the air hoses remain under pressure), products 17 are displaced in the direction of arrow 47 until a product that has been displaced over the roller conveyor 5 to a position above the transverse roller conveyor 7 actuates a roll switch 48. Driving of chains 18 is stopped and the cylinders 35 are then actuated so that the transverse roller conveyor 7 moves from the rest position from fig. 2 to the transporting position, in which the transporting plane of the transverse roller conveyor 7 is located at a higher level than that of the roller conveyors 5 and 6. The rest position of the transverse roller conveyor 7 is indicated by the proximity switch 49 and the transporting position by the proximity switch 50. When the transporting position is reached the motor 40 is actuated, which results in the rolls 20 beginning to rotate and the pallet resting on the transverse roller conveyor 7 being conveyed from above roller conveyor 5 to above roller conveyor 6. The transverse transportation or actuation of motor 40 is interrupted when the light path between the detector 51 and reflector 52 is interrupted. Using cylinders 35 the transverse roller conveyor 7 is subsequently displaced into the rest position shown in fig. 2, whereby the pallet is transferred and rests on the rolls 13 of roller conveyor 6. The chain 18 of roller conveyor 6 is then driven as long as necessary until the pallet is no longer situated above transverse roller conveyor 7, a position detected by detector 53 and its co-operating reflector 54.

Loading and transverse transporting can be repeated as often as necessary until a product reaches the unloading position 75, this being detected by detector 55 and the cooperating reflector 56. Projections 77 prevent unexpected and unwanted transporting over roller conveyors 5 and 6 outside of the vehicle.

It can be deduced form the above that the load can be transferred via the transverse roller conveyor 7 from the one roller conveyor 5 or 6 onto the other by way of a hairpin-like path which is bounded on the inside by a partition wall 57.

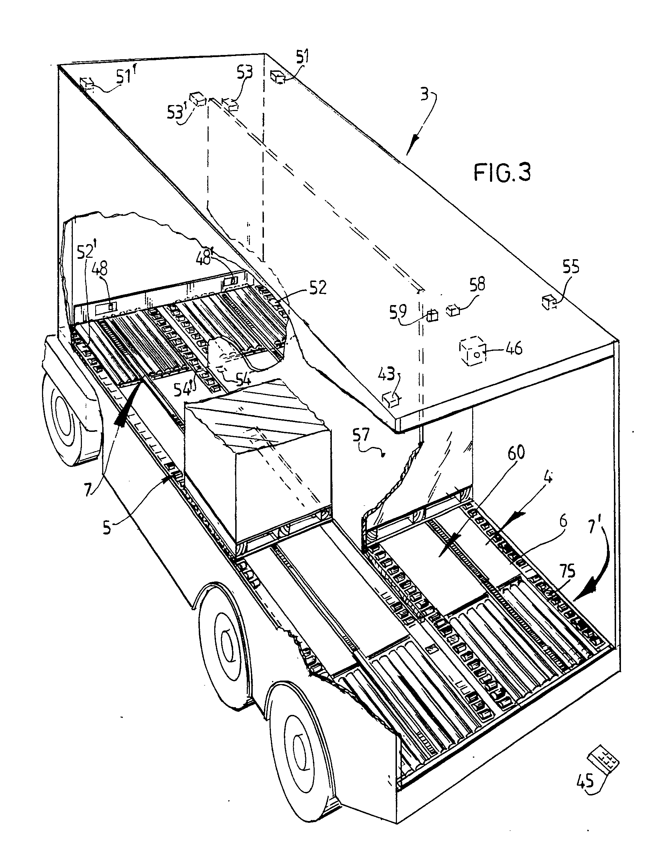

Fig. 3 shows a vehicle 3 according to the invention that is provided with another loading floor 4 according to the invention. Identical elements or elements having the same action have been given the same reference numeral, while elements occurring twice are provided with an accent symbol. The transverse roller conveyor 7' is distinguished from roller conveyor 7 by the absence here of the roll switches 48 and 48', because these functions are superfluous and are taken over by the detectors 43 and 55 as well as the detectors 58 and 59 which are equivalent to the detectors 53 and 53' and which record a product leaving the transverse roller conveyor 7'.

In the vehicle 3 a transporting loop 60 is thus formed by the roller conveyors 5 and 6 and the respective transverse roller conveyors 7 and 7' placed at the end wall positions thereof.

It should be noted that in the case of both embodiments there has been no rotation of the load relative to the input position during the circulating transporting, so that the load can be picked up by the forks of the fork-lift truck at the loading and unloading position.

## Claims

1. A loading floor (2, 4) having two roller conveyors (5, 6) located at an interval from each other and transporting means (15) for conveying freight (17) over said roller conveyors (5, 6), having at least one transverse conveyor (7) provided with load transporting means (36) lying transversely of both said roller conveyors (5, 6) and having moving means (35) with which on the one hand both said roller conveyors (5, 6) and on the other said transverse roller conveyor (7) being movable relative to each other, wherein the transverse conveyor (7) is mounted on a frame (32) which frame (32) being movable such that a transporting plane of the transverse roller conveyor (7) is displaceable in and out of a common transporting plane of the two roller conveyors (5, 6) and when the transverse roller conveyor is in its transporting position, the transverse transporting plane is located at a higher level relative to the common transporting plane characterised in that the transverse conveyor (7) is a transverse roller conveyor being displaced over a distance a in the transportation direction of the roller conveyor (5, 6) towards its adjacent roller conveyor end.

2. A loading floor (2, 4) as claimed in claim 1 characterised in that the transverse roller conveyor (7) is located at head ends of both roller conveyors (5, 6).

3. A loading floor (2, 4) as claimed in claims 1 or 2, characterised in that both roller conveyors (5, 6) form together with two transverse roller conveyors (7, 7') a transporting loop (60).

4. A loading floor (2, 4) as claimed in claims 1—3, characterised by having control means for regulating the transport of the freight (17) over both roller conveyors (5, 6) and over the transverse roller conveyor (7) or conveyors (7, 7').

5. A loading floor (2, 4) as claimed in claims 1—4, characterised in that the loading floor (2, 4) is arranged on a vehicle (1, 3).

6. A loading floor (2, 4) as claimed in, claims 1—5, characterised in that the roller conveyors (5, 6) which extend parallel and adjacent to each other are separated by a partition wall (57).

7. A loading floor (2, 4) as claimed in claim 1—8, characterised in that the frame (32) of the transverse roller conveyor (7) is provided with a stop wall (41).

## Patentansprüche

1. Ladebühne (2, 4) mit zwei Rollenförderern (5, 6), die im Abstand voneinander angeordnet sind, und Transporteinrichtungen (15) zum Fördern von Fracht (17) über die Rollenförderer (5, 6) wenigstens einem Querförderer (7) mit Lasttransporteinrichtungen (36), der quer zu beiden Rollenförderern (5, 6) verläuft, und Bewegungseinrichtungen (35) mittels welchen einerseits beide Rollenförderer (5, 6) und andererseits der Querrollenförderer (7) relativ zueinander bewegbar sind, wobei der Querförderer (7) auf einem Gestell (32) montiert ist, welches derart bewegbar ist, daß eine Transportebene des Querrollenförderers (7) in die und aus der gemeinsamen Transportebene der beiden Rollenförderer (5, 6) verlagerbar ist und sich die Quertransportebene in einer größeren Höhe relativ zu der gemeinsamen Transportebene befindet, wenn der Querrollenförderer sich in seiner Transportposition befindet, dadurch gekennzeichnet, daß der Querförderer (7) ein Querrollenförderer ist, welcher um einen Abstand (a) in der Förderrichtung der Rollenförderer (5, 6) zu seinem benachbarten Rollenfördererende hin versetzt ist.

2. Ladebühne (2, 4) nach Anspruch 1, dadurch gekennzeichnet, daß der Querrollenförderer (7) an Aufnahmeenden beider Rollenförderer (5, 6) angeordnet ist.

3. Ladebühne (2, 4) nach Anspruch 1 oder 2, dadurch gekennzeichnet, daß beide Rollenförderer (5, 6) zusammen mit zwei Querrollenförderern (7, 7') eine Förderschleife (60) bilden.

4. Ladebühne (2, 4) nach Ansprüchen 1 bis 3, gekennzeichnet durch Steuereinrichtungen zum Steuern des Transports der Fracht (17) über beide Rollenförderer (5, 6) und über den Querrollenförderer (7) oder die Querrollenförderer (7, 7').

5. Ladebühne (2, 4) nach Ansprüchen 1 bis 4, dadurch gekennzeichnet, daß die Ladebühne (2, 4) auf einem Fahrzeug (1, 3) angeordnet ist.

6. Ladebühne (2, 4) nach Ansprüchen 1 bis 5, dadurch gekennzeichnet, daß die Rollenförderer (5, 6), die sich zueinander parallel und benachbart erstrecken, über eine Trennwand voneinander getrennt sind.

7. Ladebühne (2, 4) nach Ansprüchen 1 bis 8, dadurch gekennzeichnet, daß das Gestell (32) des Querrollenförderers (7) mit einer Anschlagwand (41) ausgestattet ist.

**Revendications**

1. Plate-forme de chargement (2, 4) pourvue de deux convoyeurs à rouleaux (5, 6) écartés l'un de l'autre et de moyens de transport (15) pour acheminer du fret (17) par dessus lesdits convoyeurs à rouleaux (5, 6), avec au moins un convoyeur transversal (7) pourvu de moyens de transport de charges (36) placé transversalement aux deux convoyeurs à rouleaux (5, 6) et avec des moyens de déplacement (35) grâce auxquels les deux convoyeurs à rouleaux (5, 6) d'une part et ledit autre convoyeur transversal (7) d'autre part peuvent être déplacés l'un par rapport à l'autre, dans lequel le convoyeur transversal (7) est monté sur un châssis (32), lequel châssis (32) est mobile, de sorte qu'un plan de transport du convoyeur à rouleaux transversal (7) peut être déplacé dans et hors d'un plan de transport commun des deux convoyeurs à rouleaux (5, 6), et, lorsque le convoyeur à rouleaux transversal est dans sa position de transport, le plan de transport transversal est situé à un niveau plus élevé par rapport au plan de transport commun, caractérisé en ce que le convoyeur transversal (7) est un convoyeur à rouleaux transversal qui est déplacé sur une distance $a$ dans le sens du transport du convoyeur à rouleaux (5, 6) en direction de son extrémité de convoyeur à rouleaux adjacent.

2. Plate-forme de chargement (2, 4) selon la revendication 1, caractérisée en ce que le convoyeur à rouleaux transversal (7) est placé aux extrémités de tête des deux convoyeurs à rouleaux (5, 6).

3. Plate-forme de chargement (2, 4) selon les revendications 1 ou 2, caractérisée en ce que les deux convoyeurs à rouleaux (5, 6) forment, avec deux convoyeurs à rouleaux transversaux, une boucle de transport (60).

4. Plate-forme de chargement (2, 4) selon les revendications 1 à 3, caractérisée par des moyens de commande pour réguler le transport du fret (17) sur les deux convoyeurs à rouleaux (5, 6) et sur le convoyeur (7) ou les convoyeurs (7, 7') à rouleaux transversal ou transversaux.

5. Plate-forme de chargement (2, 4) selon les revendications 1 à 4, caractérisée en ce que la plate-forme de chargement (2, 4) est placée sur un véhicule (1, 3).

6. Plate-forme de chargement (2, 4) selon les revendications 1 à 5, caractérisée en ce que les convoyeurs à rouleaux (5, 6) qui s'étendent parallèlement et adjacents l'un par rapport à l'autre sont séparés par une paroi de séparation (57).

7. Plate-forme de chargement (2, 4) selon les revendications 1 à 8, caractérisée en ce que le châssis (32) du convoyeur à rouleaux transversal (7) est pourvu d'une paroi de butée (41).

FIG.1

FIG. 2

EP 0 268 323 B1

FIG.3